(19) **Europäisches Patentamt / European Patent Office / Office européen des brevets**

(11) **EP 2 449 399 B1**

(12) # FASCICULE DE BREVET EUROPEEN

(45) Date de publication et mention de la délivrance du brevet:
**18.03.2015 Bulletin 2015/12**

(21) Numéro de dépôt: **10724480.8**

(22) Date de dépôt: **02.06.2010**

(51) Int Cl.:
**G01S 3/802** *(2006.01)* **G01S 3/803** *(2006.01)*

(86) Numéro de dépôt international:
**PCT/EP2010/057750**

(87) Numéro de publication internationale:
**WO 2011/000660 (06.01.2011 Gazette 2011/01)**

(54) **PROCÉDÉ DE DÉTECTION DE TRAINS SENSIBLEMENT PÉRIODIQUES DE BOUFFÉES DE SIGNAUX SENSIBLEMENT SINUSOÏDAUX**

VERFAHREN ZUM DETEKTIEREN VON IM WESENTLICHEN PERIODISCHEN BURSTS VON IM WESENTLICHEN SINUSFÖRMIGEN SIGNALEN

METHOD FOR DETECTING SUBSTANTIALLY PERIODIC SERIES OF BURSTS OF SUBSTANTIALLY SINUSOIDAL SIGNALS

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **29.06.2009 FR 0903157**

(43) Date de publication de la demande:
**09.05.2012 Bulletin 2012/19**

(73) Titulaire: **Ixwaves SARL**
**29200 Brest (FR)**

(72) Inventeurs:
• **KOPP, Laurent**
**F-06220 Vallauris (FR)**
• **EYRIES, Michel**
**F-06480 La Colle sur Loup (FR)**

(74) Mandataire: **Collet, Alain et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A2- 0 348 363    WO-A1-2005/124386**
**WO-A2-01/98796    US-A- 3 992 692**
**US-A- 4 951 263**

• **BAXLEY P A ET AL: "Automated matched-field tracking in shallow water 2000 IEEE international symposium" OCEANS 2000 MTS/IEEE CONFERENCE AND EXHIBITION SEPT. 11-14, 2000, PISCATAWAY, NJ, USA,IEEE, vol. 2, 11 septembre 2000 (2000-09-11), pages 869-875, XP010520929 ISBN: 978-0-7803-6551-3**

EP 2 449 399 B1

Printed by Jouve, 75001 PARIS (FR)

**EP 2 449 399 B1**

**Description**

La présente invention se rapporte à un procédé de détection de trains de bouffées sensiblement périodiques de signaux sensiblement sinusoïdaux.

Un accident récent de Juin 2009 (vol AF 447 Rio-Paris) a mis en lumière le problème de la recherche en temps limité de « boîtes noires » (enregistreurs de bord) immergées suite à la destruction de l'aéronef au-dessus de la mer. Cette recherche se fait par détection, à l'aide d'un capteur immergé, des signaux émis par les « pingers » (émetteurs) de ces boîtes noires. De tels signaux se composent d'une porteuse, théoriquement sinusoïdale (l'oscillateur la produisant n'est pas très stable) hachée de façon sensiblement périodique (le hachage n'est pas non plus très stable). Il en résulte un train de « bouffées » (« bursts » en anglais) d'oscillations sensiblement sinusoïdales à enveloppe rectangulaire. Des signaux de ce type se rencontrent également en réception de sonars ou de signaux radar.

À titre illustratif, on décrira ici les « pingers » classiques des enregistreurs de bord utilisés en aéronautique. Ces « pingers » sont de petits émetteurs qui émettent pendant une durée de l'ordre de 30 jours des signaux acoustiques à porteuse sinusoïdale (d'une fréquence de 37.5 KHz dans le cas des boites noires de l'AF447) dont la durée est de l'ordre de 10 ms, à une cadence de répétition de l'ordre de la seconde, ceci afm d'économiser le plus possible la source d'énergie d'alimentation des pingers . Ces pingers sont mis en service au contact de l'eau. Au signal émis (un train ininterrompu pendant 30 jours) se superpose, au niveau du récepteur utilisé, le bruit d'environnement acoustique qui pourra être le bruit de mer ou le bruit propre de la plate-forme de recherche comportant le récepteur.

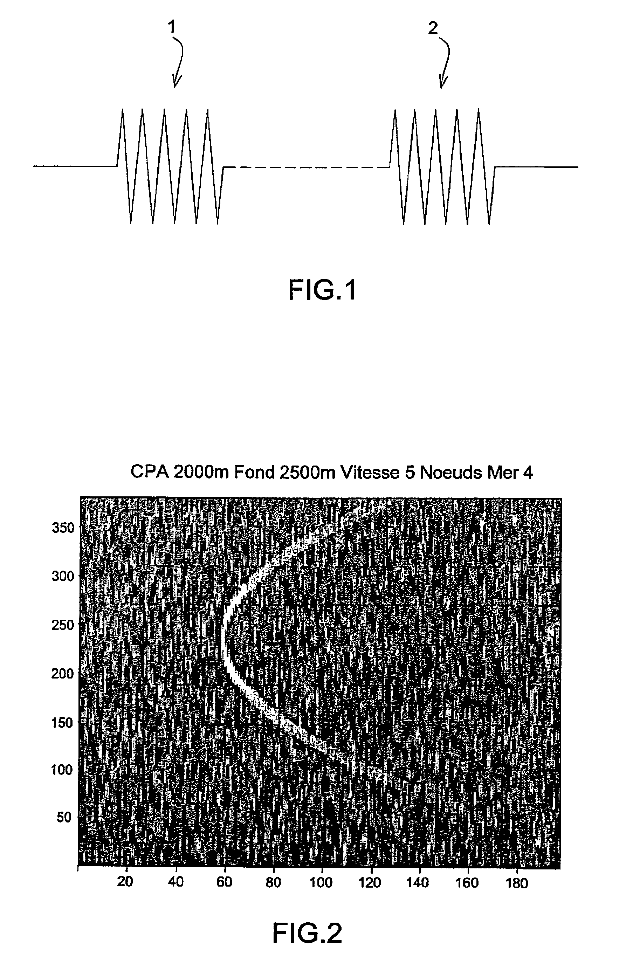

On a schématisé en figure 1 un exemple de chronogramme de deux bouffées ou périodes successives 1, 2 de sinusoïdes à enveloppe rectangulaire émises par un « pinger ». Sur le dessin, ces deux périodes ont été représentées proches, mais dans la réalité, du fait que la période utile (pendant laquelle sont émises les sinusoïdes) est très faible par rapport à la période de répétition du hachage (de l'ordre de 1%, pour l'exemple cité ci-dessus), les deux périodes successives sont très distantes l'une de l'autre.

Les systèmes actuels de recherche des « boîtes noires » utilisent essentiellement l'audio (après hétérodynage et filtrage) et la vidéo de sonagramme, et sont des systèmes conçus pour être utilisés en temps réel par un opérateur. Les performances de détection par ces systèmes connus de recherche des « boîtes noires » ne sont pas toujours suffisantes, en particulier dans un milieu marin agité. Corrélativement l'approche actuelle nécessite l'attention constante de plusieurs opérateurs entraînés pendant des durées extrêmement longues (jusqu'à 30 jours). Par ailleurs, la relecture des enregistrements audio effectués exige autant de temps que leur acquisition (car basé sur l'audition).

La présente invention a pour objet un procédé de détection de trains de bouffées sensiblement périodiques de signaux sensiblement sinusoïdaux, en particulier, adapté pour des trains de bouffées de signaux émis par des « pingers », ce procédé permettant d'assurer la détection rapide et fiable de tels signaux en présence de bruits parasites importants. L'invention a également pour objet la localisation précise des émetteurs de tels signaux une fois leurs signaux détectés. L'invention a également pour objet la détection de signaux issus d'équipements émettant de façon récurrente, tels que les sondeurs ou les sonars de proximité, et donc de prévenir une collision avec les porteurs de ces équipements. L'invention doit pouvoir être mise en oeuvre en présence ou non de mouvement relatif entre l'émetteur et le récepteur de tels signaux.

➢ A cet effet, l'invention a pour objet un procédé de détection d'un pinger selon les revendications du présent brevet.

De façon avantageuse, la présentation des résultats est faite sous forme d'image bi-dimensionnelle des récurrences successives des bouffées en fonction des cases temps des signaux reçus.

Selon une caractéristique de l'invention, la détection des signaux est faite par sommation de l'énergie (intégration incohérente) présente à la sortie d'un filtre :

- dont la fréquence centrale est calée sur la fréquence de la porteuse,
- dont la largeur de bande est supérieure ou égale à l'inverse de la durée d'une bouffée,
- dont la cadence de sortie est sensiblement égale à la durée d'une bouffée (ou plus rapidement si l'on souhaite un recouvrement temporel entre les périodes d'analyse).

La présente invention sera mieux comprise à la lecture de la description détaillée d'un mode de mise en oeuvre, pris à titre d'exemple non limitatif et illustré par le dessin annexé, sur lequel :

- la figure 1, décrite ci-dessus, est un exemple de chronogramme de deux périodes successives de signaux émis par un « pinger »,
- la figure 2 est une vue d'un écran de visualisation sur lequel est formée une image bi-dimensionnelle résultant de la détection d'un train de signaux selon le procédé conforme à la présente invention, et
- la figure 3 est une courbe représentant la relation entre l'instant de réception et l'instant d'émission de signaux selon le procédé conforme à la présente invention,

- La figure 4 décrit le synoptique de mise en oeuvre du procédé selon l'invention depuis l'entrée du signal acoustique jusqu'à la visualisation, et
- La figure 5 décrit la trajectoire du récepteur dans une zone d'investigation donnée selon une procédure d'utilisation du procédé de l'invention dans un dispositif de recherche en mer.

La présente invention est décrite ci-dessous en référence à la détection de signaux émis par des « pingers » avioniques, mais il est bien entendu qu'elle n'est pas limitée à cette seule application, et qu'elle peut être mise en oeuvre pour la détection de trains sensiblement périodiques de signaux sensiblement sinusoïdaux (appelés par la suite porteuse pour simplifier la description) émis par d'autres types d'émetteurs, tels que ceux des sonars et des radars.

De façon résumée, le procédé de l'invention comporte les étapes principales suivantes :

- l'exploitation faiblement (typiquement 3 minutes) différée du signal reçu, cette exploitation se faisant par :

  ➢ l'analyse spectrale du signal reçu et son intégration temporelle,
  ➢ et avantageusement par la présentation des résultats de l'étape précédente sous forme d'image bi-dimensionnelle des récurrences successives des bouffées en fonction des cases temps des signaux reçus.

Le principe de la détection selon l'invention comporte essentiellement la sommation par intégration incohérente de l'énergie présente à la sortie d'un filtre :

- dont la fréquence centrale est calée sur la fréquence de la porteuse,
- dont la largeur de bande est supérieure ou égale à l'inverse de la durée d'une bouffée,
- dont la cadence de sortie est sensiblement égale à la durée d'une bouffée (ou plus rapidement si l'on souhaite un recouvrement temporel entre les périodes d'analyse).

La sommation de l'énergie de sortie du filtre se fait au rythme de la période du train de bouffées, c'est-à-dire que la sommation de l'énergie de sortie du filtre se fait à des instants distincts de la période d'émission.

Même si les impulsions arrivent de façon périodique (ce qui n'est pas exactement vrai, comme exposé ci-dessous), l'instant d'arrivée initial d'une bouffée dans une période n'est pas connu. Cette « phase initiale » n'étant pas connue, et même étant variable, le procédé de l'invention consiste à réaliser l'intégration incohérente mentionnée ci-dessus en réalisant en parallèle cette intégration selon les différentes phases initiales possibles.

À titre d'exemple, si la cadence d'émission est de 1 seconde et si la durée de l'impulsion est de 10 ms, la période de 1 seconde est découpée en 100 « cases temps » de 10 ms. Le filtre est réalisé par analyse spectrale de 100 Hz (en pratique une FFT sur 10 ms). Toutes les 10 ms on dispose donc d'une valeur de l'énergie dans le canal spectral pertinent, et chaque seconde on dispose de 100 valeurs de l'énergie correspondant aux 100 «cases temporelles ». L'intégration se fait au rythme de 1 seconde dans chaque case temporelle indépendamment. On peut typiquement intégrer N=60 fois, ce qui fournit un gain d'intégration de l'ordre de 9 dB (soit 5 log(N)).

En réalité, le gain de traitement de détection en termes de sensibilité de détection, comparé à une détection spectrale élémentaire classique, est beaucoup plus élevé en raison du mode de représentation graphique utilisé par l'invention et décrit ci-dessous.

Globalement, la méthode utilisée est optimale pour détecter un train d'impulsions dans du bruit gaussien. Il s'agit de l'application du rapport de vraisemblance généralisé à la détection d'un train d'impulsions considéré comme un signal unique.

A la suite de l'intégration incohérente, on procède à une représentation graphique qui contribue, au moins autant que l'intégration incohérente, à l'amélioration de la performance en détection.

Cette représentation graphique consiste en une représentation dite CT/T (Cases Temps/Temps) sous forme d'une image bi-dimensionnelle dans laquelle l'axe horizontal représente les « cases temps » et l'axe vertical les récurrences successives des bouffées.

La présence du train de bouffées se manifeste par l'apparition d'une trace de forme parabolique lorsque le récepteur et le pinger sont en mouvement relatif inertiel. Le sommet de la parabole correspond au moment où la distance entre le pinger et le récepteur est minimale (passage au CPA «Closest Point of Approach »). Une telle parabole est visible sur la vue de la figure 2. Cette figure 2 se rapporte à un exemple pour lequel le CPA est de 2000 m, pour un fond marin à 2500 m, une vitesse de la plate-forme porteuse du récepteur de 5 noeuds et pour une mer de force 4.

Il faut noter que cette représentation présente plusieurs avantages importants :

- Elle permet d'améliorer notablement la détection de signaux faibles (inaudibles) par le gain d'intégration.
- Elle permet aussi d'identifier sans ambiguïté la présence du phénomène par la continuité et la forme de la trace détectée. En fait, cette capacité de « tri visuel » permet de réduire significativement le seuil de détection (de plus de 7 dB), ce qui contribue également à améliorer la distance de détection.

- Enfin, elle fournit une donnée quantitative précise sur la distance du CPA, ce qui permet la localisation finale.

La forme parabolique de la trace détectée vient du fait que la distance entre le pinger et le récepteur est une fonction quadratique du temps. La formule exacte est donnée par l'analyse du mouvement.

Si le signal est émis à l'instant $t_e$ et reçu à l'instant $t_r$, on a :

$$c(t_r - t_e) = R(t_r)$$

où $R(t_r)$ est la distance séparant l'émetteur du récepteur à l'instant de réception.

Orona:

$$R(t_r) = \sqrt{R_0{}^2 + v^2(t_r - t_0)^2 + 2vY_0(t_r - t_0)}$$

$R_0 = \sqrt{Y_0{}^2 + X_0{}^2 + (H - I)^2}$ est la distance entre le pinger et le récepteur à l'instant d'origine. $X_0$ et $Y_0$ sont respectivement la valeur du CPA et la distance avant CPA à l'instant d'origine $t_0$. $H$ est la valeur de la distance d'immersion du pinger (généralement sa profondeur) et $I$ est la profondeur d'immersion du récepteur. Enfin $v$ est la vitesse du récepteur.

De ces relations on déduit la relation entre $t_r$ et $t_e$. En prenant $t_0 = 0$ :

$$t_r = \frac{(vY_0 + c^2 t_e) + \sqrt{(vY_0 + c^2 t_e)^2 - (c^2 - v^2)(c^2 t_e{}^2 - R_0{}^2)}}{(c^2 - v^2)}$$

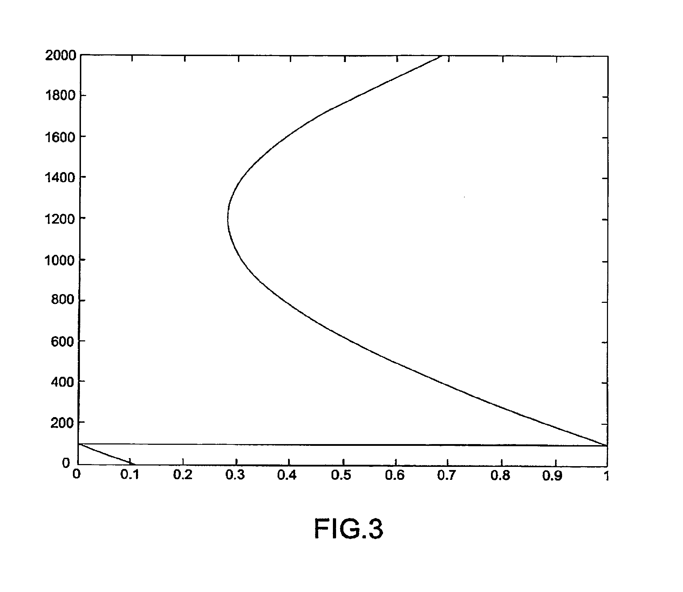

La courbe de la figure 3 représente l'expression théorique ci-dessus pour l'exemple simulé sur la figure 2, c'est-à-dire la relation entre l'instant de réception (en abscisse) et l'instant d'émission (en ordonnée). Il est à noter que l'instant de réception est représenté modulo la cadence d'émission (comme sur la figure 2).

L'effet Doppler (dû au mouvement relatif entre le pinger et le récepteur) modifie l'échelle de temps de manière significative. Dans l'exemple exposé ci-dessus, si le récepteur s'approche du pinger à une vitesse de 5 noeuds (2.5 m/s) il perçoit le train d'impulsions à une période apparente réduite de 5/3=1.7 ms/s. Ce décalage signifie que l'intégration incohérente n'est pas pertinente au-delà de 6 secondes pour cet exemple.

Le procédé de l'invention est applicable dans une zone proche du CPA. Ceci est pertinent par exemple lorsque le pinger est immergé à grande profondeur d'immersion, en limite de détection.

On peut cependant améliorer les performances de détection en compensant le décalage Doppler et en intégrant l'énergie du canal spectral pertinent, le long de trajectoires de forme parabolique dans le plan CT/T. La forme de ces paraboles correspond au CPA prévu (liée à la vitesse du récepteur et à l'immersion du pinger).

Ainsi, en compensant l'effet Doppler, le procédé de l'invention permet :

- de réaliser des durées d'intégration beaucoup plus grandes,
- d'augmenter la portée de détection,
- d'accélérer la recherche,
- de déterminer directement le CPA du pinger, ce qui réduit l'incertitude sur sa position à l'intersection d'un cercle de CPA et du fond (idéalement connu), soit deux points possibles (ambiguïté droite-gauche).

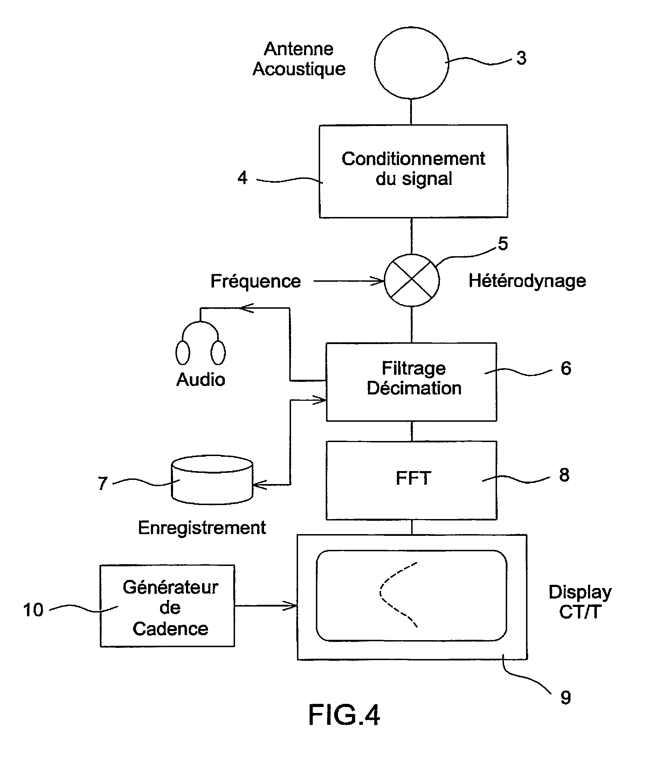

Un exemple de mise en oeuvre du procédé de l'invention est représenté sur la figure 4. Le signal (ici acoustique) est fourni sous forme analogique par un senseur qui peut être un hydrophone ou une antenne acoustique 3. Ce signal est tout d'abord conditionné (4) avant d'être codé sous forme numérique. Pour ce faire, il subit un filtrage et une amplification propres à l'adapter aux caractéristiques du convertisseur analogique numérique (fréquence d'échantillonnage et dynamique d'entrée). Il subit ensuite des opérations d'hétérodynage (5), de filtrage et de décimation (6) adaptées aux caractéristiques du pinger à détecter. Ces opérations ont pour but de limiter les quantités de données enregistrées sur un moyen d'enregistrement (7) lors des opérations de recherche, tout en conservant la capacité de « play back » (relecture de l'enregistrement) nécessaire aux investigations. Après décimation, le signal subit une analyse spectrale (8) (par exemple par Transformée de Fourier Rapide) selon une résolution temporelle et fréquentielle adaptée au pinger recherché. La représentation visuelle (9) est ensuite élaborée à partir de ces données et des paramètres de réglages complémentaires, tout particulièrement la cadence et la durée d'intégration. La cadence est soit fixée par l'opérateur, soit générée par un automate de balayage (10) qui permet de présenter sur l'écran (9) les différentes cadences possibles (sous forme d'une animation rapide).

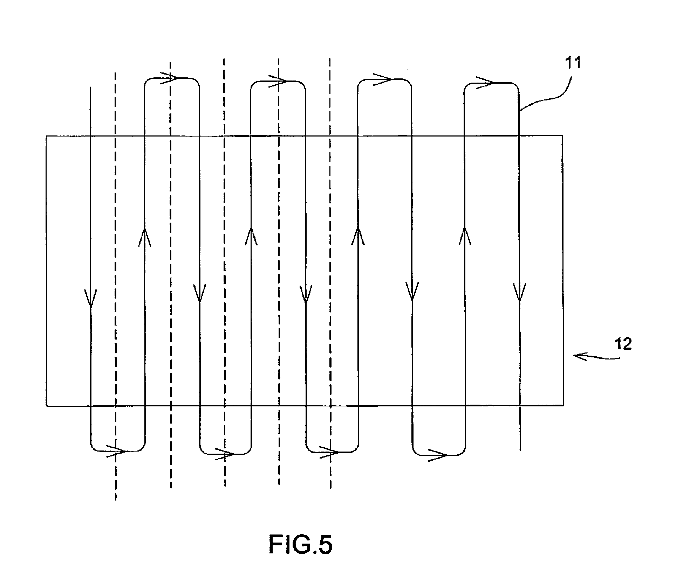

Le procédé de l'invention s'inscrit dans une procédure de recherche systématique dans laquelle la plate-forme supportant le récepteur effectue une trajectoire de recherche classique 11 « en râteau ». L'écartement entre les branches de ce râteau est lié aux performances de détection du procédé dans le contexte d'emploi (c'est-à-dire l'immersion du pinger, le bruit au niveau du récepteur et le gain d'antenne). La figure 5 illustre un exemple de forme de cette trajectoire « en râteau » dans une zone d'exploration 12 délimitée au préalable (de forme rectangulaire sur la figure 5).

Le procédé de l'invention a besoin de connaître la fréquence du pinger et sa cadence d'émission. Si ces paramètres sont inconnus, cela signifie seulement qu'ils doivent également être recherchés de manière systématique. Dans ce cas, il est préférable d'enregistrer les signaux reçus et de les traiter, de préférence en temps accéléré, selon les différentes hypothèses possibles relatives à la fréquence du pinger et à sa cadence d'émission.

Il faut noter cependant que, dans le contexte aéronautique, les paramètres du pinger sont mesurés et répertoriés. On peut donc envisager alors une exploitation « temps réel » du procédé, tout en réalisant un enregistrement des données en parallèle.

Selon une variante de l'invention, qui peut être mise en oeuvre pour détecter un émetteur de signaux du type précité (trains de bouffées de signaux sinusoïdaux) et le localiser approximativement dans une zone, en particulier une zone marine (ou lacustre), relativement étendue, mais dont l'emplacement est connu approximativement *a priori,* on dispose un ou plusieurs récepteurs fixes, qui sont fixés chacun à une bouée et immergés lorsqu'il s'agit d'une zone marine ou lacustre, ce(s) récepteur(s) étant en communication avec un poste de contrôle distant.

## Revendications

1.  Procédé de détection d'un pinger émettant à intervalles sensiblement périodiques des trains de bouffées de signaux sensiblement sinusoïdaux, **caractérisé en ce qu'**il comporte les étapes suivantes :

    ▪ détection directe du signal reçu du pinger dont les bouffées individuelles ont des phases relatives variables et inconnues par intégration incohérente de ce signal,
    ▪ analyse spectrale et intégration temporelle ;

    la détection se faisant au moyen d'un filtre dont la fréquence centrale est calée sur la fréquence de la porteuse des bouffées de signaux émises par le pinger, dont la largeur de bande est supérieure ou égale à l'inverse de la durée d'une bouffée, et dont la cadence de sortie est sensiblement égale à la durée d'une bouffée ;
    en sortie du filtre, on effectue une sommation de l'énergie présente par intégration incohérente, la sommation de l'énergie de sortie du filtre se fait au rythme de la période du train de bouffées ;
    l'intégration incohérente étant réalisée en parallèle suivant les différentes phases initiales possibles, c'est-à-dire suivant les différents instants d'arrivée initiaux possibles d'une bouffée dans une période.

2.  Procédé selon la revendication 1, **caractérisé en ce qu'**il comporte une étape de présentation des résultats d'analyse spectrale et d'intégration temporelle sous forme d'image bi-dimensionnelle des récurrences successives des bouffées en fonction des cases temps des signaux reçus.

3.  Procédé selon l'une des revendications précédentes appliqué à un récepteur ayant un mouvement relatif par rapport à l'émetteur de signaux, **caractérisé en ce que** l'intégration temporelle est réalisée selon des trajectoires Doppler permettant d'augmenter la durée d'intégration.

4.  Procédé selon l'une des revendications précédentes, pour lequel la fréquence d'émission et la cadence d'émission des bouffées sont inconnues, **caractérisé en ce que** ces paramètres recherchés de manière systématique et que l'on enregistre les signaux reçus et qu'on les traite selon les différentes hypothèses possibles relatives à la fréquence et à la cadence d'émission.

5. Procédé selon l'une des revendications 1, 2 ou 4 dans la dépendance des revendications 1 ou 2, **caractérisé en ce qu'**il est mis en oeuvre dans les cas où l'émetteur et le(s) récepteur(s) sont fixes, pour la détection de l'émetteur et sa localisation approximative dans une zone dont l'emplacement est connu approximativement *a priori.*

6. Procédé selon l'une des revendications précédentes, de détection d'un pinger dans une zone au moyen d'un ou plusieurs récepteurs, **caractérisé en ce que** la zone est une zone marine ou lacustre et que le(s) récepteur(s) est (sont) immergé(s) et fixé(s) (chacun) à une bouée.

**Patentansprüche**

1. Verfahren zum Erkennen eines Pingers, der eine Folge von Bursts von im Wesentlichen sinusförmigen Signalen in im Wesentlichen periodischen Intervallen emittiert, **dadurch gekennzeichnet, dass** es die folgenden Schritte beinhaltet:

   ■ direktes Erkennen des von dem Pinger empfangenen Signals, dessen individuelle Bursts relative Phasen haben, die variabel sind und aufgrund einer inkohärenten Integration dieses Signals unbekannt sind;
   ■ Durchführen von Spektralanalyse und Zeitintegration;

   wobei die Erkennung mittels eines Filters erfolgt, dessen Mittenfrequenz auf die Frequenz des Trägers der Bursts von von dem Pinger emittierten Signalen festgelegt ist, deren Bandbreite gleich oder größer als die Umkehr der Dauer eines Burst ist und deren Ausgangsrate im Wesentlichen gleich der Dauer eines Burst ist;
   wobei am Ausgang des Filters eine Summierung der aufgrund einer inkohärenten Integration vorliegenden Energie erfolgt, wobei die Summierung der Ausgangsenergie des Filters im Takt der Periode der Folge von Bursts erfolgt;
   wobei die inkohärente Integration parallel gemäß den verschiedenen möglichen Anfangsphasen durchgeführt wird, d.h. gemäß den verschiedenen möglichen anfänglichen Ankunftszeitpunkten eines Burst in einer Periode.

2. Verfahren nach Anspruch 1, **dadurch gekennzeichnet, dass** es einen Schritt des Präsentierens der Ergebnisse von Spektralanalyse und der Zeitintegration in Form eines zweidimensionalen Bildes von sukzessiven Rekursionen der Bursts in Abhängigkeit von den Zeitschlitzen der empfangenen Signale beinhaltet.

3. Verfahren nach einem der vorherigen Ansprüche, angewandt auf einen Empfänger mit einer relativen Bewegung in Bezug auf den Signalsender, **dadurch gekennzeichnet, dass** die Zeitintegration über Doppler-Pfade erfolgt, die eine Erhöhung der Integrationsdauer zulassen.

4. Verfahren nach einem der vorherigen Ansprüche, wobei die Emissionsfrequenz und die Emissionsrate der Bursts unbekannt sind, **dadurch gekennzeichnet, dass** diese Parameter systematisch gesucht werden, und dadurch, dass die empfangenen Signale aufgezeichnet werden, und dadurch, dass sie gemäß den verschiedenen möglichen Hypothesen relativ zur Frequenz und der Emissionsrate verarbeitet werden.

5. Verfahren nach Anspruch 1, 2 oder 4 in Abhängigkeit von Anspruch 1 oder 2, **dadurch gekennzeichnet, dass** es in Fällen, in denen der Sender und der/die Empfänger fixiert sind, zum Erkennen des Senders und seines ungefähren Ortes in einer Zone implementiert wird, dessen Ort *a priori* ungefähr bekannt ist.

6. Verfahren nach einem der vorherigen Ansprüche zum Erkennen eines Pingers in einer Zone mittels eines oder mehrerer Empfänger, **dadurch gekennzeichnet, dass** die Zone eine maritime oder lakustrine Zone ist, und dadurch, dass der/die Empfänger eingetaucht und (jeweils) an einer Boje befestigt ist/sind.

**Claims**

1. A method for detecting a pinger transmitting series of bursts of substantially sinusoidal signals at substantially periodic intervals, **characterised in that** it comprises the following steps:

   ■ direct detection of the signal received from said pinger, the individual bursts of which have relative phases that are variable and unknown due to incoherent integration of said signal;

- spectral analysis and time integration;

with the detection being effected by means of a filter, the central frequency of which is set to the frequency of the carrier of the bursts of signals transmitted by said pinger, the bandwidth of which is greater than or equal to the inverse of the duration of a burst and the output rate of which is substantially equal to the duration of a burst; the energy present due to incoherent integration is added at the output of said filter, with the adding of the output energy of said filter occurring at the rate of the period of the series of bursts; with the incoherent integration being carried out in parallel according to the various possible initial phases, i.e. according to the various possible initial instants of arrival of a burst in a period.

2. The method according to claim 1, **characterised in that** it comprises a step of presenting results of spectral analysis and time integration in the form of a two-dimensional image of the successive recurrences of the bursts as a function of the time slots of the received signals.

3. The method according to any one of the preceding claims applied to a receiver with a relative movement in relation to said signal transmitter, **characterised in that** the time integration is carried out along Doppler trajectories that allow the integration duration to be increased.

4. The method according to any one of the preceding claims, wherein the transmission frequency and the transmission rate of the bursts are unknown, **characterised in that** these parameters are systematically sought and **in that** the received signals are recorded and **in that** they are processed according to the various possible hypotheses relative to the frequency and the transmission rate.

5. The method according to claim 1, 2 or 4 as dependent on claim 1 or 2, **characterised in that** it is implemented in cases in which the transmitter and the receiver(s) are fixed, for the detection of the transmitter and the approximate location thereof in a zone, the location of which is *a priori* approximately known.

6. The method according to any one of the preceding claims for detecting a pinger in a zone by means of one or more receivers, **characterised in that** said zone is a marine or lacustrine zone and **in that** the receiver(s) is/are submerged and (each) fixed to a buoy.

**FIG.1**

CPA 2000m Fond 2500m Vitesse 5 Noeuds Mer 4

**FIG.2**

8

FIG.3

Antenne
Acoustique                     3

4 —— Conditionnement
           du signal

                                              5
Fréquence ——→  ⊗   Hétérodynage

Audio

                 Filtrage
                 Décimation        6

7 —— Enregistrement        FFT        8

10 —— Générateur
         de
         Cadence                 Display
                                    CT/T

                                       9

FIG.4

FIG.5